# EUROPEAN PATENT APPLICATION

(11) **EP 4 684 988 A1**
(43) Date of publication of application: **28.01.2026**
(21) Application number: 25191232.5
(22) Date of filing: 23.07.2025
(51) Int. Cl.: B60J 3/04

(54) **METHOD OF EYE PROTECTION FROM THE SUN'S RAYS IN A ROAD VEHICLE AND RELATED ROAD VEHICLE**

(30) Priority: 26.07.2024 IT 202400017458
(71) Applicant: FERRARI S.p.A., 41100 Modena (IT)
(72) Inventor: PETTINATO, Elena, 41100 MODENA (IT)
(74) Representative: Studio Torta S.p.A.

(57) **Abstract**

Road vehicle(1) comprising: four wheels (2, 3), of which at least one pair is driven; a passenger compartment (6) configured to accommodate a driver (DR) and preferably at least one passenger (PG); a plurality of windows (10) delimiting at least partially the passenger compartment (6); a protection device (18) for protecting the eyes of the driver (DR) and/or the passenger (PG) from the sun rays (SR), arranged at at least one of the plurality of windows (10) of the road vehicle (1); a control unit (19) configured to control the protection device (18) to obscure/opacify selectively and at least partially a protective area (PA) of the at least one of the plurality of windows (10); wherein the protective area (PA) is interposed between the sun (S) and the eyes of the driver (DR) and/or the at least one passenger (PG) .

## Description

### CROSS-REFERENCE TO RELATED APPLICATIONS

This patent application claims priority from Italian patent application no. 102024000017458, filed on July 26, 2024, the entire disclosure of which is incorporated herein by reference.

### BACKGROUND

The present invention relates to a method of eye protection from the sun's rays in a motor vehicle; the present invention also relates to a relative road vehicle comprising such system and configured to perform such method.

### PRIOR ART

Systems for eliminating the sun rays that can cause discomfort to the driver or the passenger of a road vehicle are known.

Usually, these systems comprise a movable sun visor hinged to the roof of the vehicle at an upper portion of the windscreen of the road vehicle. Such visor is configured to be overturned around a horizontal axis passing through two hinges, so as to interpose itself between the sun and the driver's eyes, and thus to block the passage of the sun rays.

In addition, such visor can be overturned around a horizontal axis passing through the outer hinge, usually positioned in proximity to the respective upright A, so as to block the sun rays if they pass through the window on the driver's or the passenger's side.

However, the known systems have considerable disadvantages.

In the first place, despite opening the conventional sun visors, on most occasions the discomfort caused by the sun rays is not properly resolved, since the surface of the visor and its positioning are limited. Therefore, if the sun is positioned below a certain threshold, for example several hours after dawn or before sunset, it is easy for those rays to cause discomfort, in any case, to the driver or the passenger, passing through areas of the vehicle's windows (i.e. the windscreen or the windows) that are not reachable by the visors.

Regardless of the discomfort produced by the sun rays directed towards the eyes of the occupants of a passenger compartment of a road vehicle, there is also a major problem of safety. In these cases, in fact, it is possible for the driver to be dazzled and commit errors while driving.

There is therefore a need for an improved system of protection of the eyes of the driver or passenger from the sun's rays in a road vehicle.

### DESCRIPTION OF THE INVENTION

The object of the present invention is to provide a method of eye protection from the sun's rays in a road vehicle and related road vehicle, which are at least partially free of the drawbacks described above, are easy and economical to manufacture and, in particular, allow performance to be maximised during travel on a track, without making the road vehicle unstable.

According to the present invention, a method of eye protection from the sun's rays in a road vehicle and related road vehicle is provided according to what is claimed in the independent claims that follow and, preferably, in any one of the claims that are directly or indirectly dependent upon the independent claims.

The claims describe preferred embodiments of the present invention and form an integral part of this description.

### BRIEF DESCRIPTION OF THE DRAWINGS

The present invention will now be described with reference to the appended drawings, which illustrate a non-limiting embodiment thereof, wherein:
- Figure 1 is a perspective and schematic view of a road vehicle in accordance with the present invention;
- Figure 2 is a perspective and schematic view, with parts removed for clarity, of the interior of the vehicle of Figure 1, comprising a system for eye protection from the sun's rays according to a first embodiment;
- Figure 3 is a perspective and schematic view, with parts removed for clarity, of the interior of the vehicle of Figure 1, comprising a system for eye protection from the sun's rays according to a second embodiment;
- Figure 4 is a perspective and schematic view, with parts removed for clarity, of the interior of the vehicle of Figure 1, comprising a system for eye protection from the sun's rays according to a third embodiment;
- Figure 5 is a perspective and schematic view, with parts removed for clarity, of the interior of the vehicle of Figure 1, comprising a system for eye protection from the sun's rays according to a fourth embodiment; and
- Figure 6 is a perspective and schematic view, with parts removed for clarity, of the interior of the vehicle of Figure 1, comprising a system for eye protection from the sun's rays according to a fifth embodiment.

### PREFERRED EMBODIMENTS OF THE INVENTION

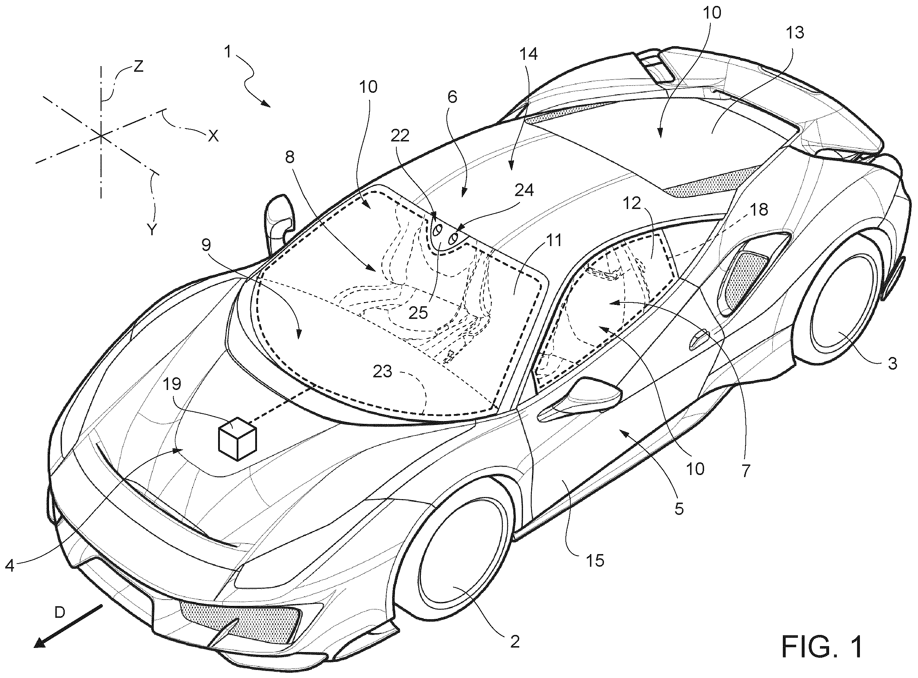

In Figure 1, the number 1 generically denotes, in its entirety, a road vehicle provided with two front wheels 2 and two rear wheels 3, of which at least one pair (or all) receive the driving torque from a power train system 4.

In particular, the powertrain system 4 can be exclusively thermal (i.e. comprises only an internal combustion engine), hybrid (i.e. comprises an internal combustion engine and at least one electric engine), or electric (i.e. comprises only one or more electric engines).

The same reference numbers and reference letters in the figures identify the same elements or components with the same function.

In this description, the term "second" component does not imply the presence of a "first" component. Such terms are, in fact, adopted as labels to improve clarity and should not be intended as limiting.

The elements and features illustrated in the different preferred embodiments, including the drawings, may be combined with each other without deviating from the scope of protection of this application as described below.

It is specified that, in the description that follows, expressions such as "above", "below", "front", "rear" and similar are used with reference to conditions of normal travel of the road vehicle 1 along the normal direction of travel D.

As shown in the non-limiting embodiment of Figure 1, it is also possible to define:
- a longitudinal axis X, solidly constrained to the vehicle 1 and arranged, in use, horizontal and parallel to a normal direction of travel D of the vehicle 1;
- a transverse axis Y, solidly constrained to the vehicle 1 and arranged, in use, horizontal and orthogonal to the axis X; and
- a vertical axis Z, solidly constrained to the vehicle 1 and arranged, in use, vertical and orthogonal to the axes X, Y.

The road vehicle 1 further comprises a body 5 defining a passenger compartment 6, which is configured to accommodate at least a driver DR and possibly one or more passengers. The passenger compartment 6 defines at least a driving position 7 for the driver DR and preferably also one passenger position 8.

In the non-limiting embodiment of Figure 1, the road vehicle 1 further comprises a vehicle dashboard 9 arranged inside the passenger compartment 6, delimiting the front of the passenger compartment 6 with reference to a normal direction of travel D of the road vehicle 1 (i.e. along the aforementioned axis X) and arranged facing the driving position 7.

The road vehicle 1 further comprises a plurality of windows 10 delimiting at least partially the passenger compartment, in particular at least a windscreen 11, delimiting the front of the passenger compartment 6 and arranged adjacent to the vehicle dashboard 9, two side windows 12 delimiting the sides of the passenger compartment 6 and a rear window 13, which delimits the back of the vehicle 6.

In the non-limiting embodiment of Figure 1, the road vehicle further comprises:
- a vehicle roof 14 delimiting the top of the passenger compartment 6; and
- a pair of doors 15 hinged to the body 5 and movable between a closed position, in which they delimit the sides of the passenger compartment 6 and prevent entry into the passenger compartment 6 or exit from the passenger compartment 6, and an open position, in which they allow entry into the passenger compartment or exit from the passenger compartment 6.

In particular, the side windows 12 are comprised within the doors 15.

Preferably, the road vehicle 1 comprises a steering wheel 16 exiting from the dashboard 9 towards a seat 17.

Advantageously, the road vehicle 1 comprises a protection device 18 for protecting the eyes of the driver DR and/or of the passenger PG from the sun rays SR. In detail, the protection device 18 is arranged at at least one of the windows 10, preferably at least the windscreen 11, in particular at least the windscreen 11 and the front side windows 12, more in particular also at the rear window 13.

Advantageously, the road vehicle 1 comprises a control unit 19 configured to control the protection device 18 to obscure/opacify selectively and at least partially a protective area PA of the at least one of the plurality of windows 10. In particular, the protective area PA is interposed between the sun S and the eyes of the driver DR and/or of the at least one passenger PG. In this manner, the sun rays S causing discomfort for the eyes of the occupants of the passenger compartment 6, i.e. the driver DR and the passenger PG, are at least partially interrupted or at least reduced.

Physically, the control unit 19 may comprise a single device or several devices separate from each other and communicating by means of the CAN network of the road vehicle 1.

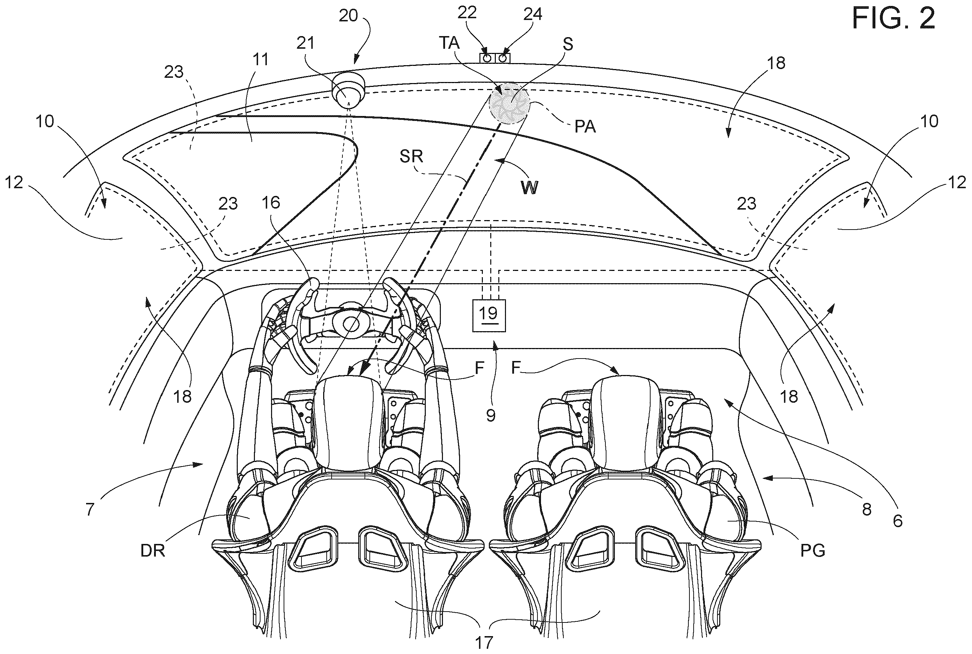

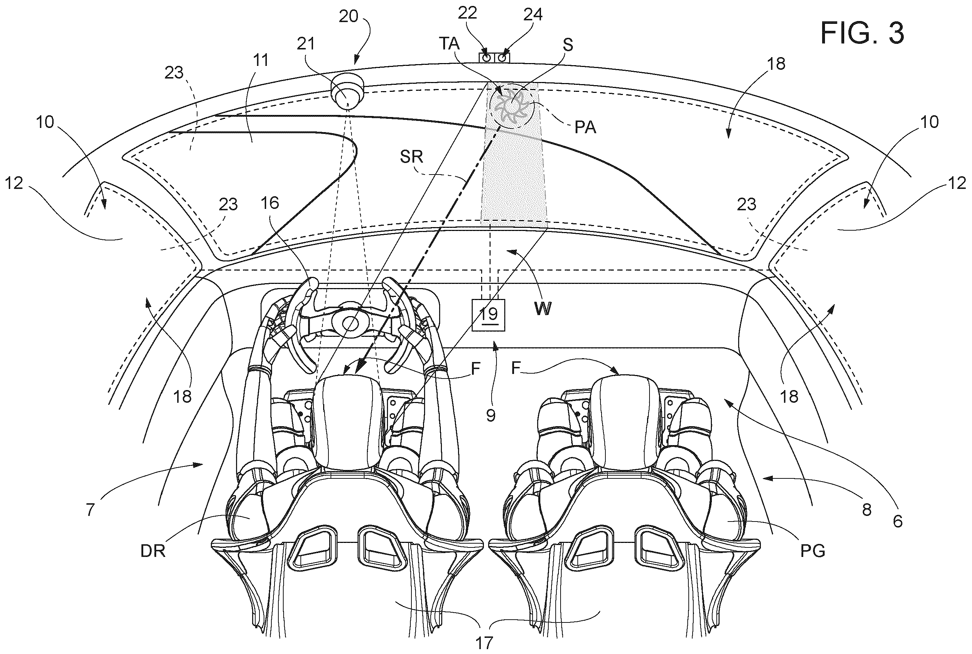

In particular, therefore, the protective area PA is a zone of a window 10, for example the windscreen, as shown in the non-limiting embodiments of Figures 2 to 4 and 6, which is selectively, or locally, obscured to create a shadow W on the face F, in particular on the eyes of the driver DR and/or the passenger PG. In other words, the protection device 18 provides for the obscuring/opacifying of part of the window 10, for example the windscreen, which reaches a different percentage of transparency with respect to the rest of the window 10 not comprised within the protective area PA.

According to several non-limiting embodiments, as shown in the embodiments of the appended drawings, the road vehicle 1 further comprises a first sensor element 20 facing inwardly to the passenger compartment 6 (i.e. towards the driver DR and/or the passenger PG) and configured to detect the eye position (or at least a reference of the face F) of the driver DR and/or the at least one passenger PG.

In detail, the control unit 19 is configured to control the protection device 18 to position or move the protective area PA (on the window 10) based on the detected position of the eyes, so as to produce a shadow W on the face of the driver and/or the passenger, protecting their eyes from the discomfort produced by the sun rays SR.

In particular, the first sensor element is a video camera 21.

Preferably, but in a non-limiting manner, the first sensor element 20 is installed/mounted at an upper portion of the windscreen 11, in particular in a portion of the vehicle usually called the ceiling fixture.

According to further non-limiting embodiments not shown, the control unit 19 is configured to control the protection device 18 based on an input provided by the driver and/or by the passenger, for example by detecting one of them touching a window 10 and obscuring/opacifying the area touched.

According to several non-limiting preferred embodiments, the control unit 19 is further configured to control the protection device 18 to position or to move the protective area PA based on the position (relative to the eyes, or to the face F, of the driver DR and/or the passenger PG) of the sun S and/or the inclination (i.e. direction) of the sun rays SR.

As shown in the non-limiting embodiments of the appended drawings, the vehicle 1 comprises a second sensor element 22 facing outwardly from the passenger compartment 6 and configured to detect the position (relative to the eyes, or to the face F, of the driver DR and/or the passenger PG) of the sun S and/or the inclination (i.e. direction and also intensity) of the sun rays SR.

Preferably, but in a non-limiting manner, the second sensor element 22 is also installed/mounted at an upper portion of the windscreen 11, in particular of the ceiling fixture.

According to other non-limiting embodiments, not shown, the control unit 19 receives the position (relative to the eyes, or to the face F, of the driver DR and/or the passenger PG) of the sun S and/or the inclination (i.e. direction and also intensity) of the sun rays SR, combining vehicular data with data coming from an external source, such as a server provided with weather information.

Advantageously, but in a non-limiting manner, the control unit 19 is configured to identify a transparent area TA of the at least one window 10 interposed between the eyes of the driver DR and/or the at least one passenger PG through which the sun rays that hit the eyes of the driver DR and/or passenger PG pass.

In particular, the control unit 19 is configured to control the protection device 18 to switch the transparent area TA to the protective area PA.

More in particular, therefore, the transparent area TA is smaller than the protective area PA.

In other words, therefore, by means of the first sensor element 20 and the second sensor element 22, the control unit 19 processes a vector that joins the face F of the driver DR and/or the passenger PG with the sun S. Such vector is incident with at least one window 10 (for example the windscreen 11) in the transparent area TA, which is consequently obscured/opacified on command of the control unit 19 to the protection device 18.

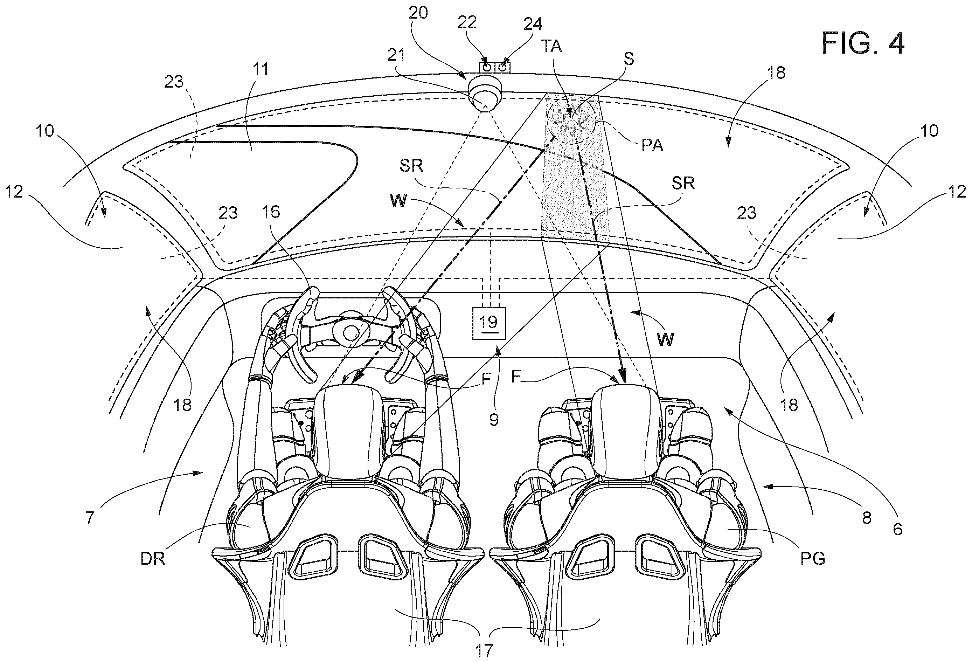

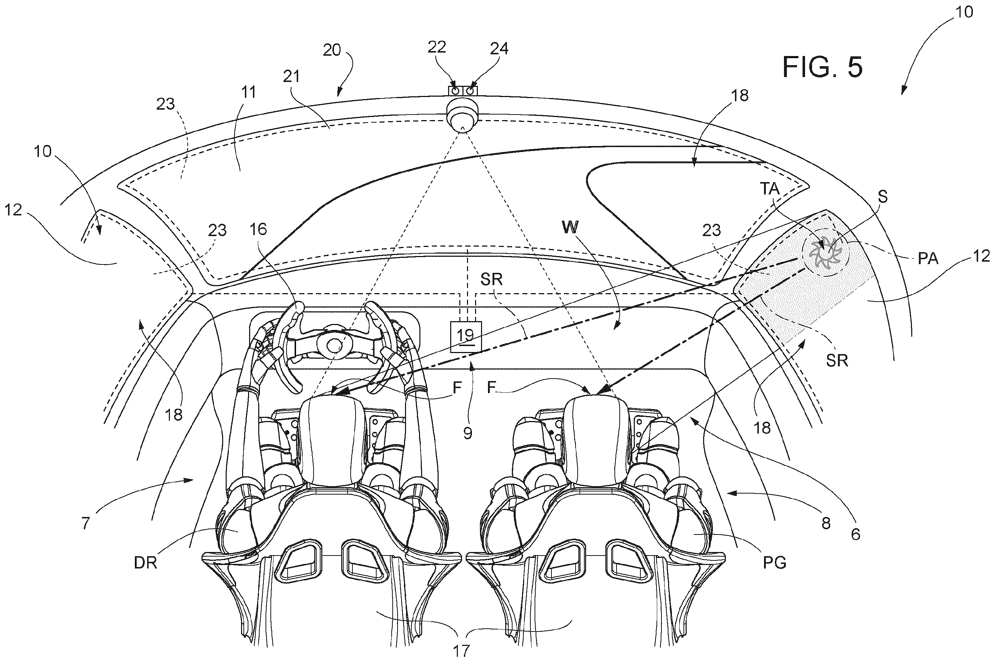

According to several non-limiting embodiments, the unit control 19 is configured to command the movement of the protective area over the same window 10 and/or from one window 10 to another as the position of the sun S and/or the eyes of the driver DR and/or the passenger PG changes. In other words, as shown in the embodiments of Figures 4 and 5, as the relative position between the sun S and the eyes of the driver DR or the passenger PG changes, the control unit 19 is configured to command the protection device 18 in order to move the protective area PA by continuing to intercept the sun rays SR directed towards the eyes or the face F of the driver DR and/or the passenger PG. In this manner, protection from the discomfort caused by the sun S is also guaranteed in the case of movements of the occupants of the road vehicle 1, as time passes, or in the case of turns or movements of the road vehicle 1 that, clearly, cause a movement of the position of the occupants and therefore a relative change with respect to the position of the sun S.

According to several preferred but non-limiting embodiments, the protection device 18 comprises a selectively and partially obscurable/opacifiable protective layer 23 applied on the at least one of the vehicle windows 10 and configured to be controlled by the control unit 19.

Preferably, but in a non-limiting manner, the layer 23 extends for at least 50% of the window 10, in particular for at least 70% of the window 10, preferably for at least 90% of the window 10.

In several non-limiting cases, the layer 23 is a film applied internally or externally to the window 10 (or a plurality thereof).

In other non-limiting cases, the layer 23 is integrated into the window 10 during the manufacturing thereof.

In particular, the protective layer 23 can comprise, in turn, a plurality of layers, so as to be able to adjust the degree of obscuring/opacifying of the protective area PA, by controlling one or more of the layers at the transparent area TA.

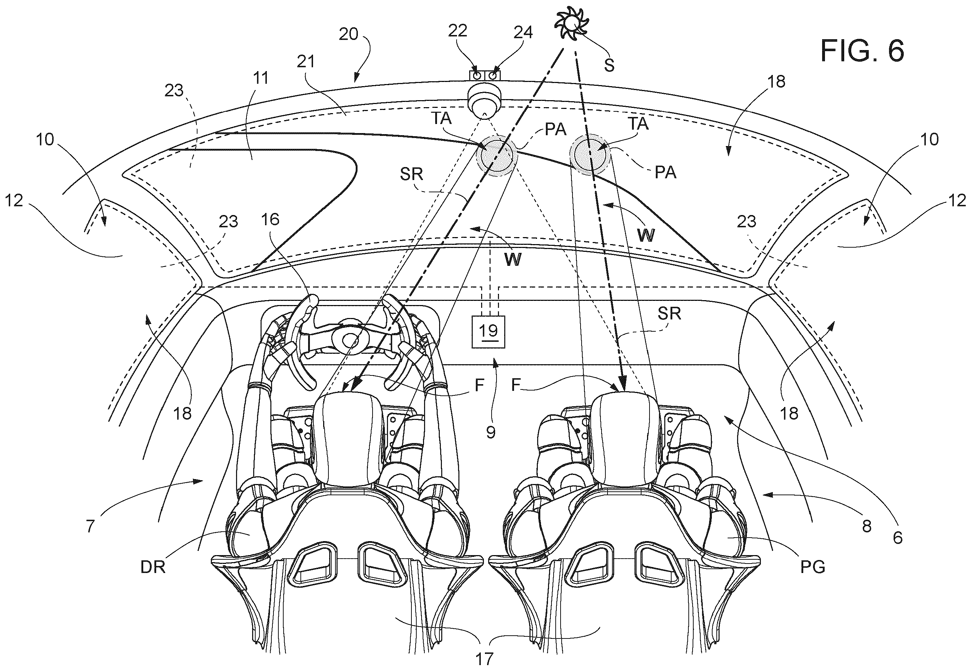

According to several non-limiting embodiments, the layer 23 comprises a plurality of vertical bands parallel to one another, which can be activated selectively, as for example shown in Figure 6.

According to several non-limiting embodiments, the layer 23 comprises electronic ink, for example the JustTint^{®} type. In these cases, the layer 23 comprises a plurality of capsules, which contain particles of ink movable, following a command, from a scattered configuration, in which the layer is opaque, to a peripheral configuration, in which the particles are arranged at the periphery of the capsule, making the layer substantially transparent.

As an alternative or in addition, the layer 23 comprises LCD, for example of the SWICHO^{®} type. In these cases, for example, the layer 23 comprises a polymeric matrix of liquid crystals encapsulated by a polyester film coated with a conductive film.

As an alternative or in addition, the layer 23 causes the window 10 to become an electrochromic glass, i.e. a material formed of two layers of ceramic material, separated by a layer of electrolyte. This composition makes it possible, by adjusting the passage of current, to pass from a state of transparency to one of opacity of the surface. In particular, when an electrical voltage is applied between the layers, the ions of the ceramic material migrate towards the other layer, causing a change in the colour of the glass. When the electrical voltage is removed, on the other hand, the ions return to their original position, forming a crystalline structure. This crystalline structure absorbs the visible light, making the glass opaque.

The control unit 19 is configured to control the protection device 18 as a function of an intensity value of the sun rays. In other words, an intensity value of the sun rays SR is identified and, if this value exceeds a predetermined value, the protection device 18 is activated to generate the protective area PA and protect the eyes of the driver DR and/or the passenger PG from the sun S.

The control unit 19 is configured to adjust an obscuring/opacifying value of the protective area PA based on the intensity value of the sun rays SR. In other words, as mentioned above in relation to the plurality of layers 23, or alternatively with the LCD or electrochromic glass technologies as described above, the opacity/obscurity of the protective area PA is adjusted based on the intensity of the sun rays SR. The greater the intensity, the opaquer/darker the protective area PA will be.

Advantageously, but in a non-limiting manner, the vehicle 1 comprises a third sensor element 24 configured to detect the intensity value of the sun rays SR.

According to several preferred but non-limiting embodiments, the second sensor element 22 and the third sensor element 24 coincide, in particular, in a further video camera 25 facing outwardly from the passenger compartment 6.

In several non-limiting cases, as shown in Figures 2 to 4 and 6, the protection device 18 is configured so that the protective area PA is substantially circular (or elliptical, or, in any case, enclosed in a closed curved or broken line).

In other non-limiting cases, like the one shown in Figure 6, the protective area PA is a vertical band.

According to several non-limiting embodiments, the edges of the protective area PA are blurred. In this manner, perception of the space behind the protective area PA by the driver DR is improved.

In accordance with a further aspect of the present invention, a method for eye protection from the sun's rays in a road vehicle is provided.

Advantageously, but in a non-limiting manner, the road vehicle 1, in particular the control unit 19, is configured/programmed to perform the method described below.

The method comprises the step of controlling, by means of the control unit 19, the protection device 18, by obscuring/opacifying selectively and at least partially the protective area PA of the at least one of the plurality of windows 10.

The method comprises the further steps of:
detecting, by means of a first sensor element 20 facing inwardly to the passenger compartment 6, the position of the eyes of the driver DR and/or the at least one passenger PG; and
controlling, via the control unit 19, the protection device 18 to arrange or move the protective area PA according to the detected eye position.

In particular, the method comprises the further step of controlling, again via the control unit 19, the protection device 18 to arrange or move the protective area PA according to the position of the sun S and/or the inclination of the sun rays SR; in particular detected via a second sensor element 22 facing outwardly from the passenger compartment 6.

Advantageously, but in a non-limiting manner, the method comprises the step of identifying a transparent area TA of the at least one window 10 interposed between the eyes of the driver DR and/or the at least one passenger PG through which the sun rays SR that hit the eyes of the driver DR and/or passenger PG pass. Subsequently, as previously mentioned, the protection device 18 is commanded by the control unit 19 to switch the transparent area TA into the protective area PA (which is preferably larger than the transparent area TA through which the sun rays SR that cause discomfort to the eyes of the driver DR or the passenger PG pass).

The protection device 18 is controlled according to the intensity value of the sun rays SR, in particular detected by means of the third sensor element 24 facing outwardly from the passenger compartment 6.

The protection device 18 is controlled, by means of the control unit 19, adjusting the obscuring/opacifying value of the protective area PA according to the intensity value of the sun rays (detected).

During use, therefore, the control unit 19 detects the position of the eyes of the driver DR and/or the passenger PG and the position of the sun S or directly the inclination of the sun rays SR. Based on these two pieces of information, it produces a line that reaches the face F of the driver DR or the passenger PG and therefore determines, at the intersection between this line and the window 10, for example the windscreen 11, the transparent area TA. If the intensity of the sun rays is higher than a certain threshold, the control unit 19 obscures the protective area TA as described above, producing, and simultaneously moving, the protective area PA, so that the shadow W produced by it always protects the eyes of the driver DR and/or the passenger PG.

Although the invention described here above makes particular reference to an example of a precise embodiment, it is not to be considered as limited to said example of an embodiment, as its scope includes all those variants, changes or simplifications covered by the appended claims, such as, for example, a different opacifying strategy, a different number of sensors, etc.

The method and the vehicle described above offer numerous advantages.

In the first place, they allow protection from the sun's rays on several windows and on a very large surface that is therefore not only limited to the surface which can be occupied by the visors.

In the second place, it is possible, by moving the protective area, to guarantee a continual protection even in the case of turns or movements of the occupants of the passenger compartment.

In conclusion, it allows elimination of the visors which, in certain cases, can cause risks from impact in the case of accidents and therefore require an expensive homologation process in certain countries.

It is important to observe that the control method described above does not involve either a high computation capacity, nor an extended quantity of memory and it can therefore be implemented in a known control unit without the need for updates or upgrades, other than installation of the protection device. In fact, the high-performance vehicles already on sale comprise various video cameras that could be used as sensor elements in accordance with what has been described above.

### LIST OF REFERENCE NUMBERS OF THE FIGURES

- 1: road vehicle
- 2: front wheels
- 3: rear wheels
- 4: powertrain system
- 5: body
- 6: passenger compartment
- 7: driving position
- 8: passenger position
- 9: dashboard
- 10: windows
- 11: windscreen
- 12: side windows
- 13: rear window
- 14: roof
- 15: doors
- 16: steering wheel
- 17: seat
- 18: protection device
- 19: control unit
- 20: first sensor element
- 21: video camera
- 22: second sensor element
- 23: protective layer
- 24: third sensor element
- 25: external video camera
- D: direction of travel
- DR: driver
- F: face
- PA: protective area
- PG: passenger
- S: sun
- SR: sun rays
- TA: transparent area
- W: shadow
- X: axis
- Y: axis
- Z: axis

## Claims

1. A road vehicle (1) comprising:
- four wheels (2, 3), of which at least one pair is driven;
- a passenger compartment (6) configured to accommodate a driver (DR) and preferably at least one passenger (PG);
- a plurality of windows (10) delimiting at least part of the passenger compartment (6);
- a protection device (18) for protecting the eyes of the driver (DR) and/or of the passenger (PG) from the sun rays (SR), arranged at at least one of the plurality of windows (10) of the road vehicle (1);
- a control unit (19) configured to control the protection device (18) to obscure/opacify selectively and at least partially a protective area (PA) of the at least one of the plurality of windows (10); wherein the protective area (PA) is interposed between the sun (S) and the eyes of the driver (DR) and/or the ones of the at least one passenger (PG);
wherein the control unit (19) is configured to control the protection device (18) according to a sun rays (SR) intensity value; wherein the control unit (19) is configured to adjust an obscuring/opacifying value of the protective area (PA) based on the sun rays (SR) intensity value.

2. The vehicle (1) according to claim 1 and further comprising:
- a first sensor element (20) facing inwardly to the passenger compartment (6) and configured to detect the eye position of the driver (DR) and/or the at least one passenger (PG);
wherein the control unit (19) is configured to control the protective device (18) to position or move the protective area (PA) according to the detected eye position.

3. The vehicle (1) according to claim 2, wherein the control unit (19) is additionally configured to command the protection device (18) to arrange or move the protective area (PA) according to the position of the sun (S) and/or the inclination of the sun rays (SR).

4. The vehicle (1) according to claim 3 and comprising a second sensor element (22) facing outwardly from the passenger compartment (6) and configured to detect the position of the sun (S) and/or the inclination of the sun rays (SR).

5. The vehicle (1) according to claim 3 or 4, wherein the control unit (19) is configured to identify a transparent area (TA) of the at least one window (10) interposed between the sun and the eyes of the driver (DR) and/or the at least one passenger (PG); wherein the control unit (19) is configured to control the protection device (18) to switch the transparent area (TA) to the protective area (PA).

6. The vehicle (1) according to any one of the preceding claims, wherein the unit control (19) is configured to command the movement of the protective area (PA) over the same window (10) and/or from one window (10) to another as the position of the sun (S) and/or the eyes of the driver (DR) and/or the passenger (PG) changes.

7. The vehicle (1) according to any one of the preceding claims, wherein the protection device (18) comprises a selectively and partially obscurable/opacifiable protective layer (23) applied on the at least one of the vehicular windows (10); wherein the protective layer (23) is configured to be controlled by the control unit (19).

8. The vehicle (1) according to claim 7, wherein said protective layer (23) comprises electronic ink and/or LCD.

9. The vehicle (1) according to claim 7 or 8 and comprising a third sensor element (24) configured to detect the sun rays (SR) intensity value.

10. The vehicle (1) according to any one of the preceding claims, wherein the protection device (18) is configured so that the protective area (PA) is enclosed in a closed curved or broken line and/or wherein the protective area (PA) is a vertical band; particularly wherein the edges of the protective area (PA) are blurred.

11. A method for eye protection from sun rays (SR) in a road vehicle (1); the road vehicle (1) comprising:
- a passenger compartment (6) configured to accommodate a driver (DR) and preferably at least one passenger (PG);
- a plurality of windows (10) delimiting at least part of the passenger compartment (6);
- a protection device (18) for protecting the eyes of the driver (DR) and/or of the passenger (PG) from the sun rays (SR), arranged at at least one of the plurality of windows (10) of the road vehicle (1);
the method comprising the step of controlling, by means of a control unit (19), the protection device (18) by obscuring/opacifying selectively and at least partially a protective area (PA) of the at least one of the plurality of windows (10); wherein the protective area (PA) is interposed between the sun (S) and the eyes of the driver (DR) and/or the at least one passenger (PG);
wherein the protection device (18) is controlled according to a sun rays (SR) intensity value;
wherein the protection device (18) is controlled, by means of the control unit (19), adjusting an obscuring/opacifying value of the protective area (PA) based on the sun rays (SR) intensity value.

12. The method according to claim 11 and comprising the further steps of:
detecting, by means of a first sensor element (20) facing inwardly to the passenger compartment (6), the position of the eyes of the driver (DR) and/or the at least one passenger (PG); and
controlling, via the control unit (19), the protection device (18) to arrange or move the protective area (PA) according to the detected eye position.

13. The method according to claim 12 and comprising the further step of controlling, via the control unit (19), the protection device (18) to arrange or move the protective area (PA) according to the position of the sun (S) and/or the inclination of the sun's rays (SR); in particular detected via a second sensor element (22) facing outwardly from the passenger compartment (6).

14. The method according to claim 13 and comprising the step of identifying a transparent area (TA) of the at least one window (10) interposed between the sun (S) and the eyes of the driver (DR) and/or the at least one passenger (PG); wherein the protection device (18) is controlled by the control unit (19) to switch the transparent area (TA) to the protective area (PA).

15. The method according to any one of claims 11 to 14, wherein the sun rays (SR) intensity value is detected by means of a third sensor element (24) facing outwardly from the passenger compartment (6).
